# EUROPEAN PATENT SPECIFICATION

(11) **EP 2 466 862 B1**
(45) Date of publication and mention of the grant of the patent: **08.01.2014**
(21) Application number: 11191059.2
(22) Date of filing: 29.11.2011
(51) Int. Cl.: H04M 3/42, H04M 3/54

(54) **Method and devices for informing a user that he or she is the recipient of a call forwarding rule**
Verfaren und Vorrichtungen zur Benachrichtigung eines Teilnehmers, dass er Empfänger einer Rufumleitung ist
Procédé et dispositifs pour informer un usager qu'il est le destinataire d'un renvoi téléphonique

(30) Priority: 14.12.2010 FR 1060467
(43) Date of publication of application: 20.06.2012
(73) Proprietor: Alcatel Lucent, 75007 Paris (FR)
(72) Inventor: Grostete, Yann, 29806 BREST (FR); Guevel, Jean-Luc, 29806 BREST (FR); Elleouet, Jerome, 29806 BREST (FR)
(74) Representative: Sciaux, Edmond

(56) References cited:
- WO-A1-01/20885
- DE-A1- 10 149 720
- US-A1- 2010 124 323

## Description

The invention pertains to a method for informing a user that he or she is the recipient of a call forwarding rule, and communication devices that make it possible to inform a user that he or she is the recipient of a call forwarding rule.

A company telecommunications network generally offers its users the option of forwarding calls initially intended for one telephone extension to another extension, either immediately, or after a certain length of time has passed if there is no answer. This forwarding rule is activated by programming the automatic exchange that establishes the communications. This programming is carried out by the user who wishes to forward the calls that are to arrive at his or her extension, using the buttons of his or her telephone, particularly in order to indicate the number of the extension to which the call must be forwarded. To cancel the call forwarding rule, the user also uses the buttons of his or her telephone, or his or her personal computer. The user who programs the forwarding rule is informed of the activation of the forwarding rule by an audible and/or visual (light or readout) indication on his or her telephone or personal computer. On the other hand, the user of the extension to which the calls will be forwarded received no indication provided by the telecommunication network at the time that the forwarding is programmed. Some automatic exchanges provide a forwarding indicator, but only when the telephone rings because a call has been forwarded to it.

This indicator is often too late. The user of the telephone receiving the forwarding rule often regrets not having been warned before a call is actually forwarded to his or her telephone for the first time, for various reasons:
- That user may have activated forwarding to a third telephone, but that second forwarding rule is not compatible with the first forwarding due to how the company is organized.
- That user might be unable to actually answer a call, for example, because he or she is busy with an important meeting.
- That user may have wanted to ask the first user if an important call had been expected.
- That user may have detected that the forwarding rule to his or her telephone had been due to the forwarded call having a wrong number.

A first known solution consists in that the first user personally warns the second user by means of a telephone call or e-mail. However, the first user might forget to do this, or might fail to reach the second user at the time when he or she wants to program the forwarding rule. The document US 2005/0002511 describes a method consisting of automatically establishing a communication with the recipient terminal, in order to enable the first user to warn the second user. The document WO 01/20885 describes another method consisting of automatically establishing a communication with the terminal receiving the forwarding rule, to warn the second user by means of a voice message read by a robot. The second user replies to the robot by accepting or by refusing the forwarding rule. The drawback of these known methods is that the second user can only be warned if he or she is close to his or her terminal at the time when the forwarding rule is programmed. If the second user is temporarily absent and then returns, he or she is not informed of the forwarding rule when he or she returns.

A second known solution consists of using a presence server within the company's telecommunication network. Any user of the network, who has the status of being an observer of a user's presence state, may observe (on his or her personal computer) that that user has forwarded the calls that are intended for him or her to the telephone of another user explicitly indicated by that presence server. However, not all of the network's users have this status of being an observer of a user's presence state. The user of the telephone receiving the forwarding does not necessarily have this right. Furthermore, that user is not necessarily present at the time when the forwarding is activated, so he or she might not necessarily observe the change in the presence state of the user who requested the forwarding.

The purpose of the invention is to remedy these drawbacks.

A first object of the invention is a method for informing a first user that he or she is the recipient of forwarded telephone calls initially intended for a second user, comprising the steps consisting of:
- sending to a telephone application server a forwarding publication message, containing the first user's identity, the second user's identity, and an indicator indicating that a forwarding rule has been created,
- then sending a forwarding notification, from that telephone application server to a terminal of the first user, this notification containing the second user's identity, and an indicator indicating the creation of a forwarding rule;
characterized in that in order to send this notification, it consists of sending it in the form of text; and in that it further consists of persistently displaying a forwarding indication and a text indicating the identity of the second user, on the terminal that received that notification.

Thanks to that forwarding notification in the form of text, the first user's terminal can inform that first user of the second user's identity persistently. If the second user is temporarily absent at the time when the forwarding rule is programmed, then comes back, he or she is informed anyway because the display of that text is persistent.

According to one particular embodiment, this method further consists of:
- including within the publication message an indication of the type of forwarding rule,
- then including this indication in the forwarding notification,
- and displaying the type of forwarding rule on the first user's terminal.

According to one particular embodiment, this method further consists of:
- including within the publication message a text that can be displayed on the first user's terminal,
- then including this text in the forwarding notification,
- and displaying this text on the first user's terminal.

A second object of the invention is a communication terminal that makes it possible to inform the user of that terminal that he or she is the recipient of telephone calls initially intended for a second user, characterized in that it comprises:
- means for receiving a forwarding notification sent by a telephone application server, in the form of text;
- and means for persistently displaying a forwarding indication and a text indicating the second user's identity, this text having been extracted from the received notification.

One particular embodiment, which further makes it possible to inform the user of another terminal that the calls initially intended for the first terminal are being forwarded to that other terminal, further comprises means for sending a forwarding publication message to a telephone application server, making it possible to inform that server that the telephone calls initially intended for the first terminal are being forwarded to that other terminal.

According to one particular embodiment, this terminal further comprises means for displaying a forwarding type indication, contained within the received notification.

According to one particular embodiment, the means for sending a publication message comprise means for inserting into that publication message: an indicator indicating that a forwarding has been created, and the identity of a user of that terminal, who is the initial recipient of the calls.

A third object of the invention is a telephone application server that makes it possible to inform a user that he or she is the recipient of a call forwarding rule, comprising:
- means for receiving a forwarding publication message, coming from a second user's terminal, and containing: an indicator indicating that a call has been created, the identity of the initial recipient of the calls, who is the second user, and the identity of the recipient of the forwarded calls, who is the first user;
- and means for subsequently sending a notification to a terminal of the first user, this notification containing an indicator indicating the creation of a forwarding rule, and the identity of the initial recipient of the calls, who is the second user;
characterized in that these means for subsequently sending a notification comprise means for sending the notification in the form of text.

The fact that this server is sending a notification in the form of a text enables the recipient terminal to display the second user's identity in the form of a text, and therefore enables him or her to display it persistently.

According to one particular embodiment, the means for receiving a forwarding publication message comprising means for receiving a forwarding type indicator, contained within that message;
and the means for sending a notification to the first user's terminal further comprise means for including a forwarding type indicator within that notification.

According to one particular embodiment, the means for receiving a forwarding publication message comprise means for further receiving a variable text contained within that message;
and wherein the means for sending a notification to a terminal of the first user further comprise means for including that text in that notification.

According to one particular embodiment, the means for receiving a forwarding publication message, and the means for sending a notification, comprise a web interface.

According to one particular embodiment, whereby the means for receiving a forwarding publication message, and the means for sending a notification, comprise an interface compliant with the SIP protocol.

The invention will be better understood and other characteristics will become apparent with the help of the description below and the accompanying figures:
- Figure 1 illustrates the operation of a first example embodiment of the inventive method, comprising a communication server and remote terminals, like a signaling protocol, the session initialization protocol, SIP.
- Figure 2 illustrates the operation of a second example embodiment of the inventive method, comprising a telephone application server equipped with a web interface, that server being coupled to a conventional enterprise network automatic exchange
- Figure 3 illustrates the operation of a third example embodiment of the inventive method, further comprising an application executed on a personal computer, for each user.

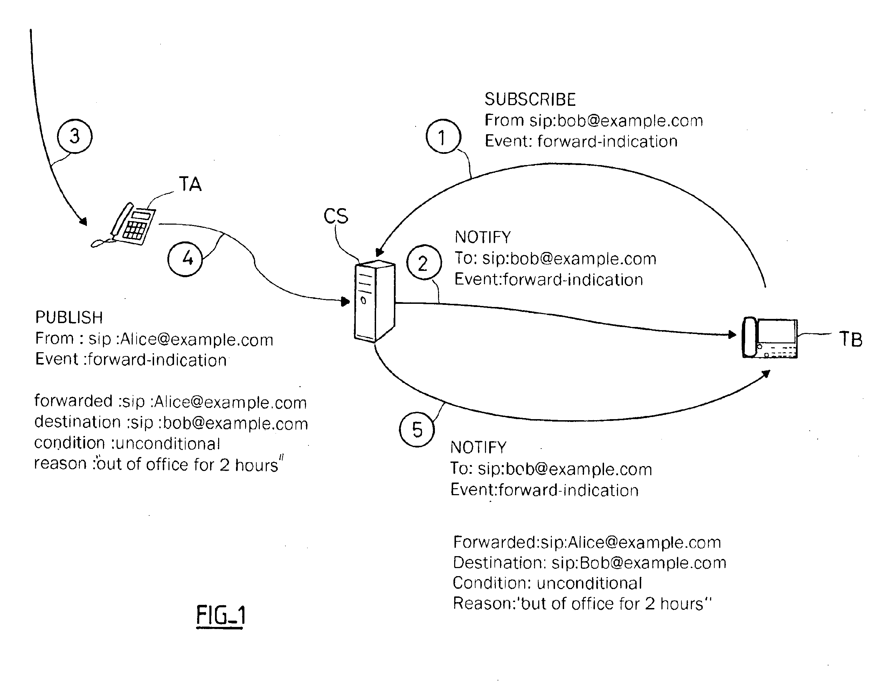

In the example depicted in **Figure 1****,** an enterprise network comprises a communication server CS and telephone terminals TA, TB, etc., using the Internet protocol and the session initialization protocol, SIP. In this example, the inventive method is implemented using the functions of the SIP protocol: PUBLISH, SUBSCRIBE, NOTIFY, described in the RFC3903 standard.

The communication server CS, and the telephone terminals TA, TB, etc., each comprise a processor executing software, which particularly makes it possible to inform a user that he or she is the recipient of a call forwarding rule, in accordance with the inventive method. For example, a first user, Alice, has the telephone terminal TA; and a second user, Bob, has the telephone terminal TB.

In the communication server CS, a software module is tasked with SIP signalling. It comprises software means for notifying a user of the creation and then deletion of a forwarding rule, if that user is a subscriber to that notification service. In each telephone terminal TA, TB, etc., a software module called a "user agent" is tasked with SIP signalling. This module comprises software means to enable a user using that terminal to subscribe to that service, and to receive a notification via that terminal whenever a forwarding rule to that user is created/deleted.

**Step 1:** Bob uses the keyboard and screen of the terminal TB to ask to benefit from the notification service for informing a user that he or she is the recipient of a call forwarding rule (In other embodiments, this operation may be automatic or be carried out when the terminal is being configured). The user agent of the terminal TB sends the communication server CS a message:
"SUBSCRIBE sip:server@example.com SIP/2.0
To: <sip:server@example.com>
From: <sip:Bob@example.com>
Call-ID: ...
CSeq: 1 SUBSCRIBE
Event: forward-indication
Accept: application/x-forward-indication
Content-Length: 0 "
This message requests that the user bob@example.com be alerted when an event called "forward-indication" constituted by the creation of a forwarding rule to the terminal of that user. The RFC 3903 standard describes the general principle of event subscription, publication, and notification. It is applicable for any event types (currently the events that exist have the types "presence", "registration", "mwi", etc.). The event type "forward-indication" does not yet exist in this standard. It would need to be created.

**Step 2:** In the communication server CS, the software means tasked with reporting the forwarding rule creation/deletion events to a user who is the recipient of that forwarding rule, send a SIP message to Bob's terminal TB:
"NOTIFY sip:Bob@example.com SIP/2.0
To: <sip:Bob@example.com>
From: <sip:server@example.com>
Call-ID: ...
CSeq: 2 NOTIFY
Event: forward-indication
Content-Type: application/x-forward-indication
Content-Length:...
forwarded: EMPTY"
This message is similar to a forwarding rule creation/deletion notification message, except that it does not contain any indication about the identity of a user who had created a forwarding rule, in the event that there is not yet any forwarding rule to Bob. In this case, this message's only function is to indicate that the user bob@example.com has subscribed to the requested service. In the event that there is already a forwarding rule to Bob, this message additionally indicates the existence of that rule and the identity of the person who created that rule.

**Step 3:** Alice uses the keyboard and screen of the terminal TA to create a forwarding rule to the user bob@example.com.

**Step 4:** The user agent of Alice's terminal TA then sends a SIP forwarding publication message to the communication server CS:
"PUBLISH sip:server@example.com SIP/2.0
To: <sip:server@example.com>
From: <sip:Alice@example.com>
Call-ID: ...
CSeq: 333 PUBLISH
Event: forward-indication
Content-Type: application/x-forward-indication
Content-Length:...
forwarded: sip:Alice@example.com
destination:sip:Bob@example.com
condition: unconditional
reason: "out of office for 2 hours"
which indicates that there is a forwarding rule for calls initially intended for the user alice@example.com, to the user bob@example.com. It contains an indication about the type of forwarding rule: "unconditional" means that the forwarding has no conditions. It also contains a Reason field for a variable text, which may be an explanation of the forwarding rule, and which is intended to be displayed on the terminal TB of the user Bob, who is the recipient of the forwarding rule. In this example, the text "out of office for 2 hours" means that Alice is absent from his or her office for about two hours (This text may be entered manually or selected from a list of preset texts).

**Step 5:** In the communication server CS, the software means tasked with reporting the forwarding rule creation/deletion events to a user who is the recipient of that forwarding rule, send a SIP message to Bob's terminal TB:
"NOTIFY sip:Bob@example.com SIP/2.0
To: <sp:Bob@example.com>
From: <sip:server@example.com>
Call-ID: ...
CSeq: 444 NOTIFY
Event: forward-indication
Content-Type: application/x-forward-indication
Content-Length:...
forwarded: sip:Alice@example.com
destination:sip:Bob@example.com
condition: unconditional
reason: "out of office for 2 hours"
which informs the user bob@example.com that the calls initially intended for the user alice@example.com are being forwarded to the user bob@example.com; that the forwarding rule is "unconditional"; and it attaches an explanation for the forwarding rule, intended to be displayed on the terminal TB: "out of office for 2 hours", meaning that Alice is absent from her office for two hours.
This information is persistently displayed on Bob's terminal, so that he is informed after he returns if he had been temporarily absent at the time that the forwarding rule had been programmed.

When Alice orders the deletion of the forwarding rule, the "user agent" software module of the terminal TB sends a SIP message to the server CS:
"PUBLISH
From: sip: Alice@example.com
Event: forward-indication
Forwarded: sip: Alice@example.com
Destination: sip: bob@example.com
Condition: canceled

Then, in the communication server CS, the software means tasked with reporting the forwarding rule creation/deletion events to a user who is the recipient of that forwarding rule, send a SIP message to Bob's terminal TB:
"NOTIFY
To: sip: bob@example.com
Event: forward-indication"
which informs the user bob@example.com that there are no longer any forwarding rules that have him as a destination. This information is persistently displayed on Bob's terminal, so that he is informed after he returns if he had been temporarily absent at the time that the forwarding rule had been deleted.

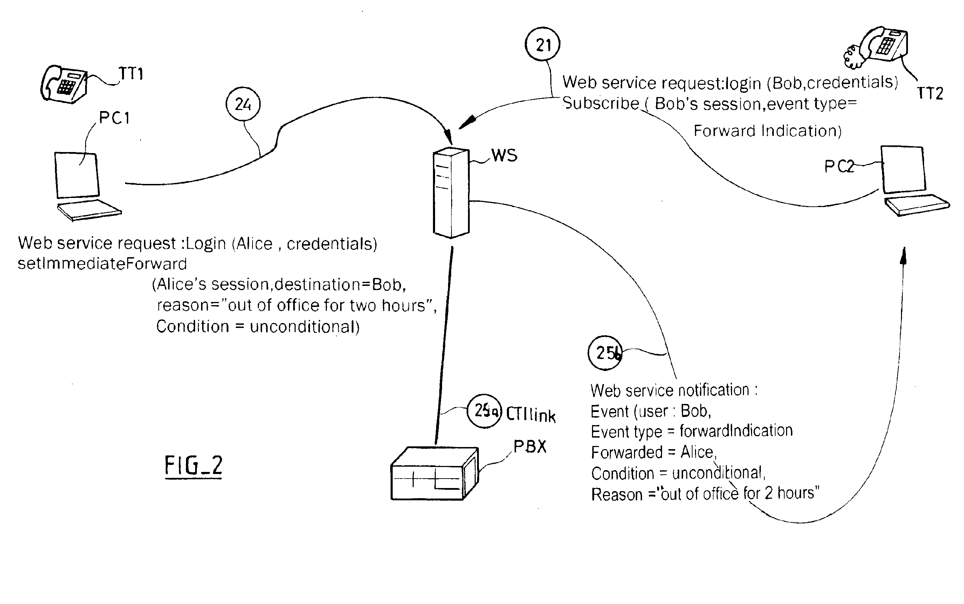

**Figure 2** depicts the operation of a second example embodiment of the inventive method, comprising a server WS which is a telephone application server equipped with a web interface. This server WS is coupled to a conventional enterprise network automatic exchange, or PBX. This server WS is shared by all the users of that enterprise network, and it particularly executes a telephone application providing a notification service for informing a user that he or she is the recipient of a call forwarding rule. In this example, the server WS uses the protocols HTTPS (Hypertext Transfer Protocol Secure) and SOAP (Simple Object Access Protocol) to receive service requests and to send notifications.

Each user, in addition to his or her telephone terminal, TT1, TT2, etc., also has a personal computer PC1, PC2, etc. In this example embodiment, this personal computer executes a thin telephone application which has a web interface and which is capable of collaborating with the telephone application executed on the server WS. In this case, this latter application is the only one to comprise a SOAP stack. In practical terms, the application in each user's computer is reduced to a graphical user interface.

The web server WS is coupled to the automatic exchange PBX by a conventional signaling link between a computer and an automatic exchange (Computer Telephony Integration, or CTI). This makes it possible to exchange commands and information about events.

**Step 21:** Bob uses his personal computer PC2 to request, from the application executed on the server WS, to benefit from the notification service for informing a user that he or she is the recipient of a call forwarding rule. To do so, the application executed on the personal computer PC2 sends a web message to the web server WS: Subscribe (Bob's session, eventType=forwardIndication) which gives Bob's identity and that of the service requested by Bob.

**Step 24:** Alice or personal computer PC1 to create a forwarding rule to Bob's extension. To do so, she runs the telephone application installed on her personal computer PC1, if she has not already run it. Alice enters her login and password, then orders a forwarding rule, specifying the name of the recipient (Bob) and the type of forwarding rule (Unconditional forwarding). She enters a short explanatory text, for example "out of office for 2 hours" which means that she is leaving the office for two hours. The telephone application executed on the personal computer PC1 sends a web message to the web server WS:
setforward (Alice's session,
destination=Bob,
condition=unconditional,
reason="out of office for 2 hours")
which orders the forwarding of calls initially intended for the user Alice to the user Bob, and which orders the reporting of that event to the recipient of the forwarding rule. It contains an indication about the type of forwarding rule: "unconditional" means that the forwarding has no conditions. It also contains a Reason field for text that can explain the forwarding rule, and which is intended to be displayed on Bob's computer PC2. In this example, the text is "out of office for 2 hours".

**Step 25 a:** The telephone application executed on the server WS orders the automatic exchange PBX to create the requested forwarding rule.

**Step 25 b:** Next, the telephone application executed on the server WS sends a web notification message to the telephone application executed on Bob's computer PC2:
Event (user: Bob,
Event type= forwardIndication
Forwarded=Alice,
Condition=unconditional,
Reason="out of office for 2 hours")
which contains the identity of the reported event (forwardIndication), the identity of the forwarding rule's recipient (Bob), the identity of the person whose calls are being forwarded (Alice), the type of forwarding rule (Unconditional), and the explanatory text provided by Alice.
Bob's computer PC2 displays this information in a form that is easily comprehensible and visible. For example, it displays this information in a window that opens in the foreground on his screen. This information is persistently displayed on Bob's computer PC2, so that he is informed after he returns, if he had been temporarily absent at the time that the forwarding rule had been programmed.

Whenever Alice orders the deletion of a forwarding rule (Actions not depicted in the figures), by means of her personal computer PC1, the telephone application executed on that computer PC1 sends a web message to the server WS:
cancelforward (Alice's session)
which orders the canceling of any current forwarding rule for Alice, and which orders the reporting of that event to the recipient of the current forwarding rule.

The telephone application executed on the server WS orders the automatic exchange PBX to delete the current forwarding rule. Next, the telephone application executed on the server WS sends a web notification message to the telephone application executed on Bob's computer PC2:
Event (user: Bob,
Event type= forwardIndication
Forwarded=Alice,
Condition= canceled)
which contains the identity of the reported events (forwardIndication), the identity of the forwarding rule's recipient (Bob), the identity of the person whose calls are being forwarded (Alice) and the type of forwarding (canceled).
Bob's computer PC2 displays this information in a form that is easily comprehensible and visible. For example, it displays this information in a window that opens in the foreground on his screen. This information is persistently displayed on Bob's computer PC2, so that he is informed after he returns, if he had been temporarily absent at the time that the forwarding rule had been deleted.

According to one variant embodiment, each personal computer PC1, PC2, etc., executes a thick telephone application that is capable of collaborating with the telephone application executed on the server WS. This thick application comprises a SOAP stack, and a web interface.

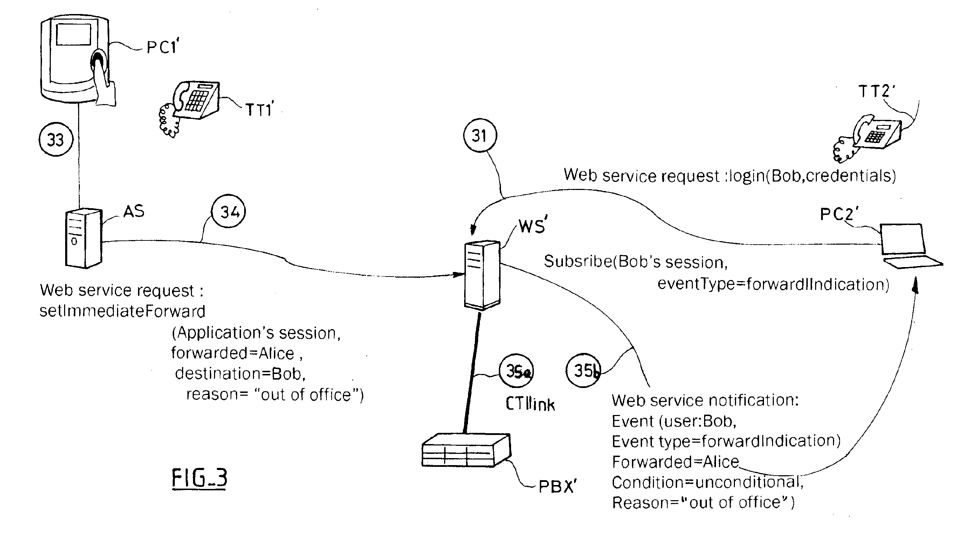

**Figure 3** depicts the operation of a third example embodiment of the inventive method, comprising, as in the previous example, a server WS' which is a telephone application server equipped with a web interface, and which is coupled to a conventional automatic exchange for enterprise networks, PBX', by a connection known as Computer Telephony Integration. This server WS' is shared by all the users of that enterprise network, and it particularly executes a telephone application providing a notification service for informing a user that he or she is the recipient of a call forwarding rule.

This example embodiment differs from the second example by the presence of an application server AS that makes it possible to automate the creation of a forwarding rule based on a predefined logic. The application server AS is shared by all users of the enterprise network. It comprises software means for detecting the absence of a user near the telephone terminal dedicated to that user, by observing events reported by the personal computer dedicated to that user.

In this example, the two application servers AS and WS' use HTTPS (Hypertext Transfer Protocol Secure) and SOAP (Simple Object Access Protocol) protocols in order to receive service requests and to send notifications.

In addition to his or her telephone terminal, TT1', TT2', etc., each user has a personal computer PC1', PC2', etc., executing a thin telephone application that has a web interface, and which is capable of collaborating with the telephone application executed on the telephone application server WS' equipped with a web interface. It is also capable of collaborating with the application executed on the application server AS.

In this example embodiment, the telephone application executed on the server WS' is the only one to comprise a SOAP stack. In practical terms, the thin telephone application executed in each user's computer is reduced to a graphical user interface.

The application executed on the server AS applies predefined rules for each employee of the company in order to order the creation/deletion of a forwarding rule. For a given employee, these rules are either defined by that employee, or defined by default. An example default rule may consist of ordering the creation of a forwarding rule to the terminal of the assistant respectively associated with the initial recipient user, every time that user's calendar indicates that he or she is absent from his or her office. Next, it may consist of ordering the deletion of that forwarding rule whenever that user's calendar indicates that he or she is present at his or her office.

According to another rule, given as an example, if the application executed on the application server AS the text that the user is leaving his or her office, by detecting that he or she closed a session on his or her personal computer PC1', then it sends the telephone application server WS a message containing: an indicator ordering the creation and reporting of a forwarding rule, the identity of the initial recipient of the calls, i.e. the absent user, and the identity of the recipient of the forwarded calls, i.e. another predefined user.

For example, in Figure 3:
**Step 31:** Bob uses his personal computer PC2' to request, from the application executed on the server WS, to benefit from the notification service for informing a user that he or she is the recipient of a call forwarding rule. To do so, the application executed on the personal computer PC2' sends a web message to the web server WS':
   Subscribe (Bob's session, eventType=forwardIndication)
which gives Bob's identity and that of the service requested by Bob.

**Step 33:** Alice turns off her personal computer PC1', or closes the current session on that computer PC1'. A software module executed on that computer PC1' reports this end of session to the application server AS.

**Step 34:** The application executed on the application server AS concludes from this that Alice is no longer near her telephone terminal. It sends a message to the telephone application server WS'. This message orders the creation of a forwarding rule for calls initially intended for the user of the computer PC1', i.e. Alice, to another predefined user, Bob in this example. This application specifies, in that message, the name of the recipient (Bob) and the type of forwarding rule (Unconditional forwarding). According to one preferred embodiment, it includes within that message a short explanatory text, for example "out of office", which means that Alice is absent from the office. In this example embodiment, the application executed on the server AS sends the telephone application server WS' a web message:
setforward (Application's session,
forwarded=Alice,
destination=Bob,
condition=unconditional,
reason="out of office")
which orders the forwarding of calls initially intended for the user Alice to the user Bob. It contains an indication about the type of forwarding rule: "unconditional" means that the forwarding rule has no conditions. It also contains a Reason field for text that can explain the forwarding rule, and which is intended to be displayed on Bob's computer PC2'. In this example, the text "out of office" means that Alice is absent from her office.

**Step 35 a:** The telephone application executed on the server WS' orders the automatic exchange PBX to create the requested forwarding rule.

**Step 35 b:** Next, the telephone application executed on the server WS' sends a web notification message to the telephone application executed on Bob's computer PC2':
Event (user: Bob,
Event type= forwardIndication
Forwarded=Alice,
Condition=unconditional,
Reason="out of office")
which contains the identity of the reported event (forwardIndication), the identity of the forwarding rule's recipient (Bob), the identity of the person whose calls are being forwarded (Alice), the type of forwarding rule (Unconditional), and the explanatory text "out of office" provided by the application server AS.
Bob's computer PC2' displays this information in a form that is easily comprehensible and visible. For example, it displays this information in a window that opens in the foreground on his screen. This information is persistently displayed on Bob's computer PC2', so that he is informed after he returns, if he had been temporarily absent at the time that the forwarding rule had been programmed.

Whenever Alice turns her personal computer PC1' back on, or opens a session again under her name (Actions not depicted in the figures), the telephone application executed on her personal computer PC1' send a web message to the server WS':
cancelforward (Alice's session)
which orders the canceling of any current forwarding rule for Alice, and which orders the reporting of that event to the recipient of the current forwarding rule.

The telephone application executed on the server WS' orders the automatic exchange PBX' to create the requested forwarding rule. Next, the telephone application executed on the server WS' sends a web notification message to the telephone application executed on Bob's computer PC2':
Event (user: Bob,
Event type= forward Indication
Forwarded=Alice,
Condition= canceled) which contains the identity of the reported events (forwardIndication), the identity of the forwarding rule's recipient (Bob), the identity of the person whose calls are being forwarded (Alice) and the type of forwarding (canceled).
Bob's computer PC2' displays this information in a form that is easily comprehensible and visible. For example, it displays this information in a window that opens in the foreground on his screen. This information is persistently displayed on Bob's terminal, so that he is informed after he returns if he had been temporarily absent at the time that the forwarding rule had been deleted.

According to one variant embodiment, the telephone application server with a web interface, WS', and the conventional automatic exchange PBX' may be replaced by an automatic exchange using the Internet and SIP protocols, as in the first example described above.

## Claims

1. A method for informing the first user that he or she is the recipient of a forwarding rule for telephone calls initially intended for a second user, comprising the steps consisting of:
- sending (4; 24; 34) to a telephone application server (CS; WS; WS') a forwarding publication message, containing the first user's identity, the second user's identity, and an indicator indicating the creation of a forwarding rule,
- then sending (5; 25; 35) a forwarding notification, from that telephone application server (CS; WS; WS') to a terminal (TB; PC2; PC2') of the first user, this notification containing the identity of the second user, and an indicator indicating the creation of a forwarding rule;
**characterized in that** this notification is sent in text form;
and **in that** it further consists of persistently displaying a forwarding indication and a text indicating the second user's identity, on the terminal (TB; PC2; PC2') that received that notification.

2. A method according to claim 1, further consisting of:
- including within the publication message (4; 24; 34) an indication about the type of forwarding rule,
- then including that indication in the forwarding notification (5; 25; 35),
- and displaying the type of forwarding rule on a terminal (TB; PC2; PC2') of the first user.

3. A method according to claim 1, further consisting of:
- including within the publication message (4; 24; 34) a variable text capable of being displayed on the first user's terminal,
- then including that indication in the forwarding notification (5; 25; 35),
- and of displaying that text on a terminal (TB; PC2; PC2') of the first user.

4. Communication terminal (TB; PC2; PC2') for informing a user of that terminal that he or she is the recipient of the telephone calls initially intended for a second user, **characterized in that** it comprises:
- means for receiving (5; 25; 35) a forwarding notification sent by a telephone application server (CS; WS; WS'), in the form of text;
- and means for persistently displaying a forwarding indication and a text indicating the second user's identity, this text having been extracted from the received notification.

5. A communication terminal (TA; PC1; PC1') according to claim 4, for further informing the user of another terminal (TB; PC2; PC2') that the calls initially intended for the first terminal (TA; PC1; PC1') are forwarded to that other terminal (TB; PC2; PC2'), **characterized in that** it further comprises means for sending (4; 24; 33-34) a forwarding publication message to a telephone application server (CS; WS; WS') for informing that server that the telephone calls initially intended for the first terminal (TA; PC1; PC1') must be forwarded to that other terminal (TB; PC2; PC2').

6. A communication terminal (TB; PC2; PC2') according to claim 4, further comprising means for displaying a forwarding type indication, contained within the received notification.

7. A communication terminal (TB; PC2; PC2') according to claim 4, further comprising means for displaying a variable text contained within the received notification.

8. A communication terminal (TA; PC1; PC1') according to claim 5, **characterized in that** the means for sending a publication message (4; 24; 33-34) comprise means for inserting within that publication message: an indicator indicating the creation of a forwarding rule, the identity of a user of that terminal, i.e. the initial recipient of the calls, and the identity of a second user, i.e. the recipient of the forwarded calls.

9. A telephone application server (CS; WS; WS') for informing a first user that he or she is the recipient of a call forwarding rule, comprising:
- means for receiving (4; 24; 33-34) a forwarding publication message, coming from a terminal (TA; PC1; PC1') of a second user, and containing: an indicator indicating the creation of a forwarding rule, the identity of the initial recipient of the calls, i.e. the second user, and the identity of the recipient of the forwarded calls, i.e. the first user;
- and means for subsequently sending (5; 25; 35) a notification to a terminal (TB; PC2; PC2') of the first user, that notification containing an indicator indicating the creation of a forwarding rule, and the identity of the initial recipient of the calls, i.e. the second user;
**characterized in that** these means for subsequently sending (5; 25; 35) a notification comprise means for sending that notification in text form.

10. A telephone application server (CS; WS; WS') according to claim 9, wherein the means for receiving (4; 24; 33-34) a forwarding publication message comprise means for receiving a forwarding type indicator, contained within that method;
and wherein the means for sending (5; 25; 35) a notification to a terminal (TB; PC2; PC2') of the first user further comprise means for including a forwarding type indicator in that notification.

11. A telephone application server (CS; WS; WS') according to claim 9, wherein the means for receiving (4; 23; 32-33) a forwarding publication message comprise means for further receiving a variable text contained within that message;
and wherein the means for sending (5; 25; 35) a notification to a terminal (TB; PC2; PC2') of the first user further comprise means for including that text in that notification.

12. A telephone application server (WS) according to claim 9, wherein the means for receiving (23; 32-33) a forwarding publication message, and the means for sending (25; 35) a notification, comprise a web interface.

13. A telephone application server (CS) according to claim 9, wherein the means for receiving (4) a forwarding publication message, and the means for sending (5) a notification comprise an interface in accordance with the SIP protocol.

## Patentansprüche

1. Verfahren zum Informieren des ersten Nutzers, dass er oder sie Empfänger einer Weiterleitungsregel für ursprünglich für einen zweiten Nutzer bestimmte Telefonanrufe ist, die folgenden Schritte umfassend:
- Senden (4; 24; 34), an einen Telefonanwendungsserver (CS; WS; WS'), einer Weiterleitungsbekanntgabenachricht, welche die Identität des ersten Nutzers, die Identität des zweiten Nutzers und einen Indikator, der die Erstellung einer Weiterleitungsregel anzeigt, enthält,
- anschließendes Senden (5; 25; 35) einer Weiterleitungsbenachrichtigung von dem besagten Telefonanwendungsserver (CS; WS; WS') an ein Endgerät (TB; PC2, PC2') des ersten Nutzers, wobei diese Benachrichtigung die Identität des zweiten Benutzers enthält, und eines Indikators, welcher die Erstellung einer Weiterleitungsregel anzeigt;
- **dadurch gekennzeichnet, dass** die besagte Benachrichtigung in Textform gesendet wird;
und dass das Verfahren weiterhin darin besteht, eine Weiterleitungsangabe und einen Text, welcher die Identität des zweiten Nutzers angibt, auf dem Endgerät (TB; PC2; PC2'), welches die Benachrichtigung empfangen hat, durchgehend anzuzeigen.

2. Verfahren nach Anspruch 1, weiterhin umfassend:
- Einfügen einer Angabe über den Typ der Weiterleitungsregel in die Bekanntgabenachricht (4; 24; 34),
- anschließendes Einfügen der besagten Angabe in die Weiterleitungsbenachrichtigung (5; 25; 35),
- und Anzeigen des Typs der Weiterleitungsregel auf einem Endgerät (TB; PC2; PC2') des ersten Nutzers.

3. Verfahren nach Anspruch 1, weiterhin umfassend:
- Einfügen eines variablen Textes, welcher auf dem Endgerät des ersten Nutzers angezeigt werden kann, in die Bekanntgabenachricht (4; 24; 34),
- Anschließendes Einfügen der besagten Angabe in die Weiterleitungsbenachrichtigung (5; 25; 35),
- und Anzeigen des besagten Textes auf einem Endgerät (TB; PC2; PC2') des ersten Nutzers.

4. Kommunikationsendgerät (TB; PC2; PC2') zum Informieren eines Nutzers des besagten Endgeräts, dass er oder sie Empfänger der ursprünglich für einen zweiten Nutzer bestimmten Telefonanrufe ist, **dadurch gekennzeichnet, dass** es umfasst:
- Mittel zum Empfangen (5; 25; 35) einer von einem Telefonanwendungsserver (CS; WS; WS') in der Form von Text gesendeten Weiterleitungsbenachrichtigung;
- und Mittel zum durchgehenden Anzeigen einer Weiterleitungsangabe und eines Textes, welcher die Identität des zweiten Nutzers angibt, wobei dieser Text aus der empfangenen Benachrichtigung extrahiert wurde.

5. Kommunikationsendgerät (TA; PC1; PC1') nach Anspruch 4 zum weiteren Informieren des Nutzers eines anderen Endgeräts (TB; PC2; PC2'), dass die ursprünglich für das erste Endgerät (TA; PC1; PC1') bestimmten Anrufe an das besagte andere Endgerät (TB; PC2, PC2') weitergeleitet werden, **dadurch gekennzeichnet, dass** es weiterhin Mittel zum Senden (4; 24; 33-34) einer Weiterleitungsbekanntgabenachricht an einen Telefonanwendungsserver (CS; WS; WS') umfasst, um den besagten Server zu informieren, dass die ursprünglich für das erste Endgerät (TA, PC1, PC1') bestimmten Telefonanrufe an das besagte andere Endgerät (TB; PC2; PC2') weitergeleitet werden müssen.

6. Kommunikationsendgerät (TB; PC2; PC2') nach Anspruch 4, weiterhin umfassend Mittel zum Anzeigen einer in der empfangenen Benachrichtigung enthaltenen Angabe über die Art der Weiterleitung.

7. Kommunikationsendgerät (TB; PC2; PC2') nach Anspruch 4, weiterhin umfassend Mittel zum Anzeigen eines in der empfangenen Benachrichtigung enthaltenen variablen Textes.

8. Kommunikationsendgerät (TA; PC1; PC1') nach Anspruch 5, **dadurch gekennzeichnet, dass** die Mittel zum Senden einer Bekanntgabenachricht (4; 24; 33-34) Mittel zum Einfügen eines Indikators, welcher die Erstellung einer Weiterleitungsregel angibt, der Identität eines Nutzers des besagten Endgeräts, d.h. des ursprünglichen Empfängers der Anrufe, und der Identität eines zweiten Nutzers, d.h. des Empfängers der weitergeleiteten Anrufe, in die besagte Bekanntgabenachricht umfassen.

9. Telefonanwendungsserver (CS; WS; WS') zum Informieren eines ersten Nutzers, dass er oder sie Empfänger einer Anrufweiterleitungsregel ist, umfassend:
- Mittel zum Empfangen (4; 24; 33-34) einer Weiterleitungsbekanntgabenachricht, welche von einem Endgerät (TA; PC1; PC1') eines zweiten Nutzers kommt und enthält: Einen Indikator, welcher die Erstellung einer Weiterleitungsregel angibt, die Identität des ursprünglichen Empfängers der Anrufe, d.h. des zweiten Nutzers, und die Identität des Empfängers der weitergeleiteten Anrufe, d.h. des ersten Nutzers;
- und Mittel zum anschließenden Senden (5; 25; 35) einer Benachrichtigung an ein Endgerät (TB; PC2; PC2') des ersten Nutzers, wobei die besagte Benachrichtigung einen Indikator, welcher die Erstellung einer Weiterleitungsregel angibt, und die Identität des ursprünglichen Empfängers der Anrufe, d.h. des zweiten Nutzers, enthält;
**dadurch gekennzeichnet, dass** die besagten Mittel zum anschließenden Senden (5; 25; 35) einer Benachrichtigung Mittel zum Senden der besagten Benachrichtigung in Textform umfassen.

10. Telefonanwendungsserver (CS; WS; WS') nach Anspruch 9, wobei die Mittel zum Empfangen (4; 24; 33-34) einer Weiterleitungsbekanntgabenachricht Mittel zum Empfangen eines Indikators für die Art der Weiterleitung im Rahmen des besagten Verfahrens umfassen;
und wobei die Mittel zum Senden (5; 25; 35) einer Benachrichtigung an ein Endgerät (TB; PC2; PC2') des ersten Nutzers weiterhin Mittel zum Einfügen eines Indikators für die Art der Weiterleitung in die besagte Benachrichtigung umfassen.

11. Telefonanwendungsserver (CS; WS; WS') nach Anspruch 9, wobei die Mittel zum Empfangen (4; 23; 32-33) einer Weiterleitungsbekanntgabenachricht Mittel zum weiteren Empfangen eines in der besagten Nachricht enthaltenen variablen Textes umfassen;
und wobei die Mittel zum Senden (5; 25; 35) einer Benachrichtigung an ein Endgerät (TB; PC2; PC2') des ersten Nutzers weiterhin Mittel zum Einfügen des besagten Textes in die besagte Benachrichtigung umfassen.

12. Telefonanwendungsserver (WS) nach Anspruch 9, wobei die Mittel zum Empfangen (23; 32-33) einer Weiterleitungsbekanntgabenachricht und die Mittel zum Senden (25; 35) einer Benachrichtigung eine Web-Schnittstelle umfassen.

13. Telefonanwendungsserver (CS) nach Anspruch 9, wobei die Mittel zum Empfangen (4) einer Weiterleitungsbekanntgabenachricht und die Mittel zum Senden (5) einer Benachrichtigung eine Schnittstelle gemäß dem SIP-Protokoll umfassen.

## Revendications

1. Procédé pour informer le premier utilisateur qu'il ou elle est le ou la destinataire d'une règle de transfert pour des appels téléphoniques initialement destinés à un deuxième utilisateur, comprenant les étapes suivantes :
- envoyer (4 ; 24 ; 34) à un serveur d'application téléphonique (CS ; WS ; WS') un message de publication de transfert, contenant l'identité du premier utilisateur, l'identité du deuxième utilisateur, et un indicateur indiquant la création d'une règle de transfert,
- puis envoyer (5 ; 25 ; 35) une notification de transfert, à partir de ce serveur d'application téléphonique (CS ; WS ; WS') à un terminal (TB ; PC2 ; PC2') du premier utilisateur, cette notification contenant l'identité du deuxième utilisateur, et un indicateur indiquant la création d'une règle de transfert ;
**caractérisé en ce que** cette notification est envoyée sous forme de texte ;
et **en ce qu'**il comprend en outre l'affichage en continu d'une indication de transfert et d'un texte indiquant l'identité du deuxième utilisateur, sur le terminal (TB ; PC2 ; PC2') qui a reçu cette notification.

2. Procédé selon la revendication 1, comprenant en outre les étapes suivantes :
- inclure dans le message de publication (4 ; 24 ; 34) une indication sur le type de règle de transfert,
- puis inclure cette indication dans la notification de transfert (5 ; 25 ; 35),
- et afficher le type de règle de transfert sur un terminal (TB ; PC2 ; PC2') du premier utilisateur.

3. Procédé selon la revendication 1, comprenant en outre les étapes suivantes :
- inclure dans le message de publication (4 ; 24 ; 34) un texte variable pouvant être affiché sur le terminal du premier utilisateur,
- puis inclure cette indication dans la notification de transfert (5 ; 25 ; 35),
- et afficher ce texte sur un terminal (TB ; PC2 ; PC2') du premier utilisateur.

4. Terminal de communication (TB ; PC2 ; PC2') pour informer un utilisateur de ce terminal qu'il ou elle est le ou la destinataire des appels téléphoniques initialement destinés à un deuxième utilisateur, **caractérisé en ce qu'**il comprend :
- des moyens pour recevoir (5 ; 25 ; 35) une notification de transfert envoyée par un serveur d'application téléphonique (CS ; WS ; WS'), sous forme de texte,
- et des moyens pour afficher en continu une indication de transfert et un texte indiquant l'identité du deuxième utilisateur, ce texte ayant été extrait de la notification reçue.

5. Terminal de communication (TA; PC1 ; PC1') selon la revendication 4, pour informer en outre l'utilisateur d'un autre terminal (TB ; PC2 ; PC2') que les appels initialement destinés au premier terminal (TA ; PC1 ; PC1') sont transférés vers cet autre terminal (TB ; PC2 ; PC2'), **caractérisé en ce qu'**il comprend en outre des moyens pour envoyer (4 ; 24 ; 33-34) un message de publication de transfert à un serveur d'application téléphonique (CS ; WS ; WS') pour informer ce serveur que les appels téléphoniques initialement destinés au premier terminal (TA ; PC1 ; PC1') doivent être transférés vers cet autre terminal (TB ; PC2 ; PC2').

6. Terminal de communication (TB ; PC2 ; PC2') selon la revendication 4, comprenant en outre des moyens pour afficher une indication de type de transfert, contenue dans la notification reçue.

7. Terminal de communication (TB ; PC2 ; PC2') selon la revendication 4, comprenant en outre des moyens pour afficher un texte variable contenu dans la notification reçue.

8. Terminal de communication (TA; PC1 ; PC1') selon la revendication 5, **caractérisé en ce que** les moyens pour envoyer un message de publication (4 ; 24 ; 33 et 34) comprennent des moyens pour insérer dans ce message de publication : un indicateur indiquant la création d'une règle de transfert, l'identité d'un utilisateur de ce terminal, c'est-à-dire le destinataire initial des appels, et l'identité d'un deuxième utilisateur, c'est-à-dire le destinataire des appels transférés.

9. Serveur d'application téléphonique (CS ; WS ; WS') pour informer un premier utilisateur qu'il ou elle est le ou la destinataire d'une règle de transfert d'appel, comprenant :
- des moyens pour recevoir (4 ; 24 ; 33 et 34) un message de publication de transfert, provenant d'un terminal (TA; PC1 ; PC1') d'un deuxième utilisateur, et contenant : un indicateur indiquant la création d'une règle de transfert, l'identité du destinataire initial des appels, c'est-à-dire le deuxième utilisateur, et l'identité du destinataire des appels transférés, c'est-à-dire le premier utilisateur.
- et des moyens pour envoyer ultérieurement (5 ; 25 ; 35) une notification à un terminal (TB ; PC2 ; PC2') du premier utilisateur, cette notification contenant un indicateur indiquant la création d'une règle de transfert, et l'identité du destinataire initial des appels, c'est-à-dire le deuxième utilisateur ;
**caractérisé en ce que** ces moyens pour envoyer ultérieurement (5 ; 25 ; 35) une notification comprennent des moyens pour envoyer cette notification sous forme de texte.

10. Serveur d'application téléphonique (CS ; WS ; WS') selon la revendication 9, dans lequel les moyens pour recevoir (4 ; 24 ; 33 et 34) un message de publication de transfert comprennent des moyens pour recevoir un indicateur de type de transfert, contenu dans ce procédé ;
et dans lequel les moyens pour envoyer (5 ; 25 ; 35) une notification à un terminal (TB ; PC2 ; PC2') du premier utilisateur comprennent en outre des moyens pour inclure un indicateur de type de transfert dans cette notification.

11. Serveur d'application téléphonique (CS ; WS ; WS') selon la revendication 9, dans lequel les moyens pour recevoir (4 ; 23 ; 32 et 33) un message de publication de transfert comprennent des moyens pour recevoir en outre un texte variable contenu dans ce message ;
et dans lequel les moyens pour envoyer (5 ; 25 ; 35) une notification à un terminal (TB ; PC2 ; PC2') du premier utilisateur comprennent en outre des moyens pour inclure ce texte dans cette notification.

12. Serveur d'application téléphonique (WS) selon la revendication 9, dans lequel les moyens pour recevoir (23 ; 32 et 33) un message de publication de transfert, et les moyens pour envoyer (25 ; 35) une notification, comprennent une interface Web.

13. Serveur d'application téléphonique (CS) selon la revendication 9, dans lequel les moyens pour recevoir (4) un message de publication de transfert, et les moyens pour envoyer (5) une notification comprennent une interface conforme au protocole SIP.
